Europäisches Patentamt

European Patent Office

Office européen des brevets

(19)

(11) Publication number: **0 169 944**
**B1**

(12) **EUROPEAN PATENT SPECIFICATION**

(45) Date of publication of patent specification: **15.03.89**

(21) Application number: **84116377.7**

(22) Date of filing: **27.12.84**

(51) Int. Cl.⁴: **F 24 H 9/12, F 16 L 41/08**

(54) A manifold valve particulary for multiple circuit heating systems.

(30) Priority: **20.07.84 IT 2198484**

(43) Date of publication of application:
**05.02.86 Bulletin 86/06**

(45) Publication of the grant of the patent:
**15.03.89 Bulletin 89/11**

(84) Designated Contracting States:
**AT BE CH DE FR GB LI LU NL SE**

(56) References cited:
**EP-A-0 003 375**
**EP-A-0 136 388**
**DE-U-7 405 314**
**FR-A-1 245 801**
**FR-A-1 564 870**
**FR-A-2 314 452**

(73) Proprietor: **Rubinetterie A. Giacomini S.p.A.**
**Via per Alzo, 48**
**I-28017 S. Maurizio d'Opaglio Novara (IT)**

(72) Inventor: **Giacomini, Mario**
**Via per Alzo, 48**
**I-28017 S. Maurizio d'Opaglio (IT)**

(74) Representative: **de Dominicis, Riccardo et al**
**de Dominicis & Partners s.a.s. Via Brera, 6**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a manifold valve particularly for multiple circuit heating systems.

In conventional multiple circuit heating systems, the delivery and return ends of the individual circuits are connected to known delivery and return manifolds. For the purpose of providing an improved regulation of the hot water flow through radiators, also known is to associate automatic and shutter valves with said manifolds. Automatic valves are provided on the return manifold, and shutter valves are provided on the delivery or intake manifolds. The automatic valves may have any configurations which may suit automatic control, such as through an electric control, space thermostat, and the like.

Prior embodiments of such automatic and shutter valves are of two-part construction, namely one part accommodating the valve or valve shutter, and another part forming the cut-off seat, said two parts being threaded into respective seats in the fitting at diametrically opposed and aligned locations. In order for such valves or shutter valves to operate properly, or to achieve a reliable closure in the cut-off position, or position of engagement of the valve or shutter valve moving body with the cut-off seat, the two parts of the valve must be mounted truly coaxial with each other. The manifold outer surfaces, moreover, must be precision machined since they form sealing surfaces. Providing two separate valve parts, mounting them in perfect coaxial relationship, and forming the sealing surfaces on the manifold involve expensive construction and assembling procedure. When it is considered, moreover, that the trend with multiple circuit heating systems favours a high number of independent circuits, it appears that each manifold is to be provided with a high number of branch connections for such circuits, e.g. on the order of 5—10 circuits. Thus, the two intake and discharge manifolds for such circuits require 20 to 40 coaxial seats, and attendant outer surface finishing, any faulty machining of one or more of such seats jeopardizing the manifold effectiveness. Another disadvantage of the prior embodiments is that assembling the two valve parts requires two threaded connections for each valve as well as several intermediate connection components. Besides being expensive to manufacture, all this involves long assembly times.

The document FR—A—2,314,452 discloses an heating radiator including a throughgoing regulating valve with a cartridge case. The ends of the valve case have no coupling portions. The case ends are houses with clearance in throughgoing seats of the radiator and are fixed therein by welding. Therefore said valves are not fit for being used in manifolds for multiple circuit heating systems.

This invention is directed to provide a manifold valve of the general type indicated herein above, which affords faultless coaxial movement of the moving valve part relatively to the cut-off seat, is of simple construction with a limited number of components, and can speed up assembling without involving any special machining of the manifold outer surfaces.

Within the above general aim, it may be arranged that the valve of this invention brings about simpler machining of its supporting seats on the manifold.

Further the valve shutter can be positioned at its selected position.

. Taking the steps from a manifold valve particularly for multiple circuit heating systems, comprising a valve housing arranged to extend through the manifold body and provided at its ends with coupling portions for engagement with corresponding seats formed in said manifold, said coupling portions being provided with a sealing means and said valve housing accommodating a valve shutter movable axially therein and cooperating with the internal sealing seat of said valve housing, whereby said valve housing is provided downstream of the sealing seat with passage windows for the fluid to be regulated and whereby an integral positioning means is provided for said shutter, the aim of this invention is achieved by a valve characterised in that:

a) a coupling portion of the valve housing is formed as a cylindrical portion housed in a cylindrical seat of the manifold and provided with the seat accommodating the valve shutter, whilst the other coupling portion of the valve housing is formed as a threaded portion housed in a threaded seat of the manifold and provided with a detent collar adapted to bear on the outer surface of the manifold, and successively a threaded fitting adapted to receive the end of the associated circuit,

b) in the cylindrical coupling portion the sealing means consists of an O-ring accommodated in a seat, provided in said cylindrical portion and cooperating with the cylindrical seat of the manifold whereas in the threaded coupling portion the sealing means consists of an O-ring accommodated in a seat provided in said threaded portion near said detent collar and in the threaded seat of the manifold, and

c) for the valve shutter is provided i. an integral positioning means in form of a threaded ring nut with a throughgoing hole for access by a spanner for driving the valve shutter and with a slot for driving said ring nut, and ii. a safety means in form of a collar formed on the outside front of the cylindrical portion of the valve body, whereby said collar, after the valve shutter and the ring nut are inserted into the seat therefore, is turned in. The cover means provided consists, according to an aspect of the invention, of a plastic covering cap inserted in said turned-in collar.

The proposed manifold valve affords both functional and constructional and assembling advantages.

Sealing during cut-off is faultlessly tight because the proposed solution results in the valve housing being a single-piece construction and involving no problems of coaxial alignment of the movable part to the stationary seat. Construction-wise, a single threaded coupling is provided between the manifold and valve, or the housing thereof, whilst to the other coupling is accomplished by means of an easily manufactured cylindrical coupling. The fitting for the associated circuit pipe is formed directly in the valve housing. The bores for the manifold seats are made with a simple boring operation. Sealing by means of O-rings is faultless and the seats for the latter can be machined in a simple conventional manner. The fluid passage ports are simply obtained by slotting. As brought out by practical tests, the valve housing practically does not alter the flow ratios. The outer surfaces of the manifolds require no further special machining since they no longer serve sealing surface functions. In addition to the valve and manifold being simpler and quicker to machine, assembling is also made faster and more reliable. This is due on the one side to the use of a small number of readily assembled components that require no relative adjustments, and on the other side, to the type of seal employed.

An additional advantage is that a means of locking the shutter at a desired position is provided, as well as a means effective to prevent the shutter from coming out. With the proposed valve, also facilitated is storage, in that the valve components are fewer in number, that is, fewer are the components required to assemble the valve and the fittings for connection to the piping of the associated heating circuits.

Further features, advantages and details of the manifold valve according to the invention will be more clearly understood from the following description, with reference to the accompaning drawing.

Figure 1 is a vertical cross-section taken through a return manifold incorporating a shutter valve, the shutter being shown in its fully open position in the right-hand half and in its closed position in the left-hand half of the figure;

Figure 2 is a top plan view of a shutter locating ring nut;

Figure 3 is a sectional view of a covering cap.

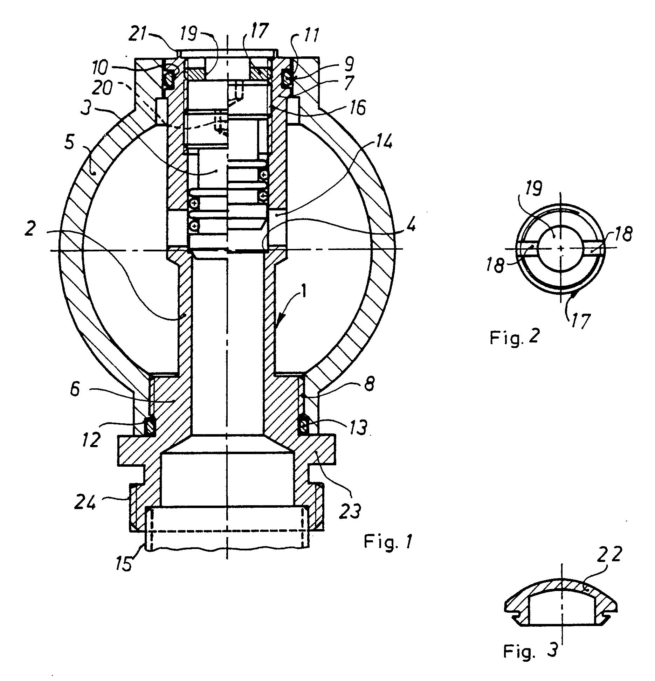

With reference to the above drawing figures, where similar parts are designated with the same reference numerals, a manifold valve according to the invention is generally indicated at 1. The same includes a full-diameter valve housing 2 with a shutter 3. The valve housing 2 is formed internally with a sealing seat 4 with which the shutter 3 cooperates. According to the invention, the valve housings 2 are fitted continuously through the manifold bodies, indicated at 5. With reference to Figure 1, at the ends of the valve housing 2, there are provided coupling portions 6 and 7 for engagement with corresponding seats 8 and 9 formed in the manifold body 5. The seat 8 in the manifold is a threaded seat, whereas the seat 9 is a cylindrical one. The portion 6 is also formed with an outside thread whereas the coupling portion 7 is a cylindrical portion. Formed therein is a seat 10 accommodating an O-ring seal 11, and the seat 8 is also formed with a seat 12 accommodating an O-ring seal 13. Indicated at 14 are slots or windows for the fluid passage from the piping of the heating circuit schematically represented in dash lines at 15, from the valve housing into the manifold 5.

Inside said cylindrical portion 7, there is formed a threaded seat 16 adapted to receive the shutter 3. Accommodated above the same is a locking and locating ring nut 17 formed with a driving slot 18. Indicated at 19 is a circular middle opening in the ring nut 17 for access by an Allen spanner to engage with the recessed hexagon 20 in the shutter 3. It may also be seen from Figure 1 that on the outer front of the cylindrical portion 7 there is formed a collar 21 which, after the shutter 3 and ring nut 17 have been inserted into the inside threaded seat 16, is turned in and prevents said ring nuts, or shutter, from coming out. At the same time, said turned-in collar 21 also acts as a retainer for a covering cap 22 (Figure 3). It may also be seen from Figure 1 that the threaded coupling portion 6 is extended to form a bearing collar 23, conveniently of hexagonal shape, and then form a threaded fitting 24 adapted to receive the return end of the piping 15 of the associated heating circuit. It is to be noted that it is not necessary to later machine the outside of the seat 8, because the seal is provided by the O-ring seal 13.

For adjusting the shutter 3 for operation, the latter will be first positioned using the hexagon end of an Allen spanner, whereafter that position will be locked by engaging the driving slots 18 of the ring nut 17 by means of a screwdriver.

Thus, the position of the shutter 3 can be changed at any time by removing the closure cap 22.

## Claims

1. A manifold valve particularly for multiple circuit heating systems, comprising a valve housing arranged to extend through the manifold body and provided at its ends with coupling portions for engagement with corresponding seats formed in said manifold, said coupling portions being provided with a sealing means and said valve housing accommodating a valve shutter movable axially therein and cooperating with the internal sealing seat of said valve housing, whereby said valve housing is provided downstream of the sealing seat with passage windows for the fluid to be regulated and whereby an integral positioning means is provided for said shutter, characterised in that:

a) a coupling portion (7) of the valve housing (2) is formed as a cylindrical portion housed in a cylindrical seat (9) of the manifold (5) and provided with the seat (16) accommodating the valve shutter (3), whilst the other coupling portion (6) of the valve housing (2) is formed as a threaded portion housed in a threaded seat (8) of the manifold (5) and provided with a detent collar (23) adapted to bear on the outer surface of the manifold (5), and successively a threaded fitting (24) adapted to receive the end of a heating circuit (15),

b) in the cylindrical coupling portion (7) the sealing means consists of an O-ring (11) accommodated in a seat (10), provided in said cylindrical portion (7) and cooperating with the cylindrical seat (9) of the manifold (5) whereas in the threaded coupling portion (6) the sealing means consists of an O-ring (13) accommodated in a seat (12) provided in said threaded portion (6) near said detent collar (23) and in the threaded seat (8) of the manifold (5), and c) for the valve shutter (3) is provided i. an integral positioning means in form of a threaded ring nut (17) with a throughgoing hole (19) for access by a spanner for driving the valve shutter (3) and with a slot (18) for driving said ring nut (17), and ii. a safety means in form of a collar (21) formed on the outside front of the cylindrical portion (7) of the valve body (2), whereby said collar (21), after the valve shutter (3) and the ring nut (17) are inserted into the seat (16) therefore, is turned in.

2. A manifold valve according to claim 1, characterised in that is provided a covering means in form of a covering cap (22) of plastics for the valve shutter (3), whereby said covering cap (22) is insertable in said turned-in collar (31).

**Patentansprüche:**

1. Ventilverteiler, insbesondere fuer mehrkreisige Heizungssysteme, enthaltend ein Ventilgehaeuse, das dazu eingerichtet ist, sich durch den Verzweigungskoerper zu erstrecken und das an seinen Enden mit Kupplungsabschnitten fuer den Eingriff entsprechender Sitze, die in der Zweigleitung ausgebildet sind, versehen ist, wobei die Kupplungsabschnitte mit einer Dichtungseinrichtung versehen sind und das Ventilgehaeuse einen Ventilschliesser aufnimmt, der darin axial beweglich ist und mit dem inneren Dichtungssitz des Ventilgehaeuses zusammenwirkt, wobei das Ventilgehaeuse stromabwaerts des Dichtungssitzes mit Durchlassfenstern fuer das zu regelnde Fluid versehen ist und wobei eine integrale Positioniereinrichtung fuer den Schliesser vorgesehen ist, dadurch gekennzeichnet, dass:

a) ein Kupplungsabschnitt (7) des Ventilgehaeuses (2) als ein zylindrischer Abschnitt ausgebildet ist, der in einem zylindrischen Sitz (9) der Zweigleitung (5) angeordnet und mit dem Sitz (16) versehen ist, der den Ventilschliesser (3) aufnimmt, waehrend der andere Kupplungsabschnitt (6) des Ventilgehaeuses (2) als ein Gewindeabschnitt ausgebildet ist, der in einem Gewindesitz (6) der Zweigleitung (5) angeordnet und mit einem Arretierkragen (23) versehen ist, der dazu eingerichtet ist, auf der Aussenseite der Zweigleitung (5) aufzusitzen, und an den sich ein Gewindefitting (24) anschliesst, das dazu eingerichtet ist, das Ende eines Heizkreises (15) aufzunehmen,

b) in dem zylindrischen Kupplungsabschnitt (7) die Dichtungseinrichtung aus einem O-Ring (11) besteht, der in einem Sitz (10) angeordnet ist, der in dem genannten zylindrischen Abschnitt (7) vorgesehen ist, und der mit dem zylindrischen Sitz (9) der Zweigleitung (5) zusammenwirkt, waehrend in dem mit Gewinde versehenen Kupplungsabschnitt (6) die Dichtungseinrichtung aus einem O-Ring (13) besteht, der in einem Sitz (12) angeordnet ist, der in dem Gewindeabschnitt (6) nahe dem Arretierkragen (23) und in dem Gewindesitz (8) der Zweigleitung (5) ausgebildet ist, und c) fuer den Ventilschliesser (3) vorgesehen ist:

i. eine integrale Positioniereinrichtung in Form einer Gewinderingmutter (17) mit einer Durchgangsbohrung (19) fuer den Angriff eines Spannelements zum Bewegen des Ventilschliessers (3) und mit einem Schlitz (18) zum Drehen der Ringmutter (17), und

ii. eine Sicherheitseinrichtung in Form eines Kragens (21), der an der Aussenseite des zylindrischen Abschnitts (7) des Ventilkoerpers (2) ausgebildet ist, wodurch dieser Kragen (21), nachdem der Ventilschliesser (3) und die Ringmutter (17) in den Sitz (16) dafuer eingesetzt sind, eingedreht wird.

2. Ventilverteiler nach Anspruch 1, dadurch gekennzeichnet, dass er mit einer Abdeckeinrichtung in Form einer Abdeckkappe (22) aus Kunststoff fuer den Ventilschliesser (3) versehen ist, wobei die Abdeckkappe (22) in den eingedrehten Kragen (21) einsetzbar ist.

**Revendications**

1. Vanne de distributeur en particulier pour systèmes de chauffage à circuits multiples, comprenant un boîtier de vanne disposé pour s'étendre à travers le corps de distributeur et muni à ses extrémités d'éléments d'accouplement destinés à venir en prise avec des logements correspondants formés dans ledit distributeur, lesdits éléments d'accouplement étant munis d'un moyen d'étanchéité et ledit boîtier de vanne recevant un obturateur de vanne mobile axialement à l'intérieur et coopérant avec le logement d'étanchéité interne dudit boîtier de vanne, ledit boîtier de vanne étant muni en aval dudit logement d'étanchéité de fenêtres de passage pour le fluide à réguler et un moyen de positionnement d'une seule pièce étant prévu pour ledit obturateur, caractérisée en ce que:

a) un élément d'accouplement (7) du boîtier de vanne (2) est sous forme d'un élément cylindrique reçu dans un logement cylindrique (9) du distributeur (5) et muni du logement (16) recevant l'abturateur de vanne (3), tandis que l'autre élément d'accouplement (6) du boîtier de vanne (2) est sous forme d'un élément fileté reçu dans un logement fileté (8) du distributeur (5) et muni d'un collier d'arrêt (23) adapté pour s'appuyer sur la surface externe du distributeur (5), et successivement d'un raccord (24) adapté pour recevoir l'extrémité d'un circuit de chauffage (15),

b) dans l'élément d'accouplement cylindrique (7), ...

le moyen d'etanchéité consiste en un joint torique (11) reçu dans un logement (10), prevu dans ledit élément cylindrique (7) et coopérant avec le logement cylindrique (9) du distributeur (5) tandis que dans élément d'accouplement fileté (6), le moyen d'étanchéité consiste en un joint torique (13) reçu dans un logement (12) prévu dans ledit élément fileté (6) à proximité dudit collier d'arrêt (23) et dans le logement fileté (8) du distributeur (5), et

c) pour l'obturateur de vanne (3) est prévu:

i. un moyen de positionnement d'une seule pièce sous forme d'un écrou à oeillet fileté (17) avec un trou traversant (19) pour l'accès par un tendeur pour commander l'obturateur de vanne (3) et avec une fente (18) pour commander ledit écrou à oeillet (17), et

ii. un moyen de sécurité sous forme d'un collier (21) formé sur le devant externe de l'élément cylindrique (7) du corps de vanne (2), ledit collier (21) étant tourné en dedans après insertion de l'obturateur de vanne (3) de l'écrou à oeillet (17) dans le logement (16) à cet effet.

2. Vanne de distributeur selon la revendication 1, caractérisée en ce qu'il est prévu un moyen de recouvrement sous forme d'un capuchon de recouvrement (22) en matière plastique pour l'obturateur de vanne (3), ledit capuchon de recouvrement (22) étant insérable dans ledit collier (31) tourné en dedans.

Fig. 1

Fig. 2

Fig. 3